# EUROPEAN PATENT SPECIFICATION

(11) **EP 3 984 925 B1**
(45) Date of publication and mention of the grant of the patent: **31.01.2024**
(21) Application number: 21203033.2
(22) Date of filing: 15.10.2021
(51) Int. Cl.: B65G 49/06

(54) **METHOD AND SHUTTLE FOR MOVING A GLASS SHEET**
VERFAHREN UND VORRICHTUNG ZUR FORDERUNG EINER GLASSCHEIBE
MÉTHODE ET NAVETTE POUR DÉPLACER UNE FEUILLE DE VERRE

(30) Priority: 15.10.2020 IT 202000024337
(43) Date of publication of application: 20.04.2022
(73) Proprietor: Bottero S.p.A., 12100 Cuneo (IT)
(72) Inventor: TERZUOLO, Pierluigi, 12100 Cuneo (IT); MEINERO, Ivo, 12100 Cuneo (IT)
(74) Representative: Studio Torta S.p.A.

(56) References cited:
- EP-A1- 2 213 595
- DE-U1- 29 519 742

## Description

### TECHNICAL FIELD

The present invention relates to a method and a shuttle for moving a glass sheet.

### STATE OF THE PRIOR ART

In the field of glass sheet processing, it is known to move glass sheets, for example from a sheet stockroom to one or more sheet processing lines, by using transfer shuttles.

On each shuttle, one or more adjacent or superimposed sheets are arranged upright, i.e., in a substantially vertical position. For this purpose, the sheet(s) rest on a lower horizontal support surface, often defined by a linear belt or roller conveyor, against a fixed lateral frame extending upwards from or above the horizontal support surface.

DE29519742U and EP2213595 disclose other examples, aimed to keep the glass sheets in vertical position.

In order to reduce the times for transferring the sheets as much as possible, the shuttles are moved at ever higher speeds, but above all with ever increasing accelerations and decelerations that can reach, in some cases, values around 3-4 m/sec². Inevitably, therefore, the sheets on board the shuttles are subjected to inertial actions which tend to overturn the sheets on the shuttle, detaching them from the lateral frame.

In order to prevent the sheets from moving on the shuttle, different retention devices are provided on board the shuttles.

Some retention devices act directly on the extended surface of the sheet opposite the one resting on the fixed lateral frame.

Although these devices are efficient for conveying common glass sheets, they cannot be used for conveying special sheets, particularly all those surface-treated sheets which cannot be touched on the treated surface. Low-emissivity sheets, i.e., those sheets in which an extended surface thereof is coated with a layer of insulating material, such as, for example, the one known as low-E, belong to the category of surface-treated sheets.

These devices are also difficult or long to configure as the geometry, dimensions, particularly the height, and thickness of the sheet to be retained vary, particularly in the presence of curved sheets, for example vehicle windscreens.

Other retention devices still act on the extended surface of the sheet, but indirectly, that is, in the absence of physical contact, since they comprise calibrated nozzles or air passages configured to generate cushions or beams of air pushing the sheet against the fixed frame.

Although used, the latter retention devices are relatively complex, bulky, and expensive, especially when high versatility of the shuttle is required for economies of scale.

### OBJECT OF THE INVENTION

It is an object of the present invention to provide a shuttle for conveying a glass sheet, which allows the above problems to be solved in a simple and inexpensive way, and in particular allows any type of sheet to be conveyed quickly regardless of its geometry, dimensions or thickness.

A further object of the present invention is to provide a shuttle, the constructive features of which allow a surface-treated glass sheet to be quickly transferred without the surface treatment being affected, damaged, or functionally compromised.

According to the present invention, a shuttle is provided for conveying a glass sheet arranged upright along a transfer direction; the shuttle comprising a lower support rest for the glass sheet, a lateral frame extending upwards and over said lower rest and defining a lateral abutment surface for said glass sheet and retention means for keeping said glass sheet parallel to said lateral abutment surface, characterised in that said retention means comprise at least one thrust member configured to act exclusively on an outer peripheral edge of said glass sheet laterally delimiting a first extended surface of said glass sheet opposite to a second extended surface of the same sheet facing said lateral abutment surface.

The present invention also relates to a method for conveying a glass sheet.

According to the present invention, a method for conveying a glass sheet is provided, as claimed in claim 10.

### BRIEF DESCRIPTION OF THE DRAWINGS

The invention will now be described with reference to the accompanying drawings, which illustrate a nonlimiting embodiment thereof, in which:
Figure 1 is a perspective view, with parts removed for clarity, of a sheet transfer assembly provided with a preferred embodiment of a sheet transfer shuttle made in accordance with the teachings of the present invention;
Figure 2 shows, in enlarged scale, the shuttle of Figure 1;
Figures 3 and 4 show, in side elevation and on an enlarged scale, the shuttle shown in Figures 1 and 2 in two different operating conditions;
Figures 5 and 6 show, on a greatly enlarged scale, an upper end portion of Figure 3 and Figure 4, respectively; and
Figure 7 shows, on a greatly enlarged scale, a lower end portion of Figure 3.

### PREFERRED EMBODIMENT OF THE INVENTION

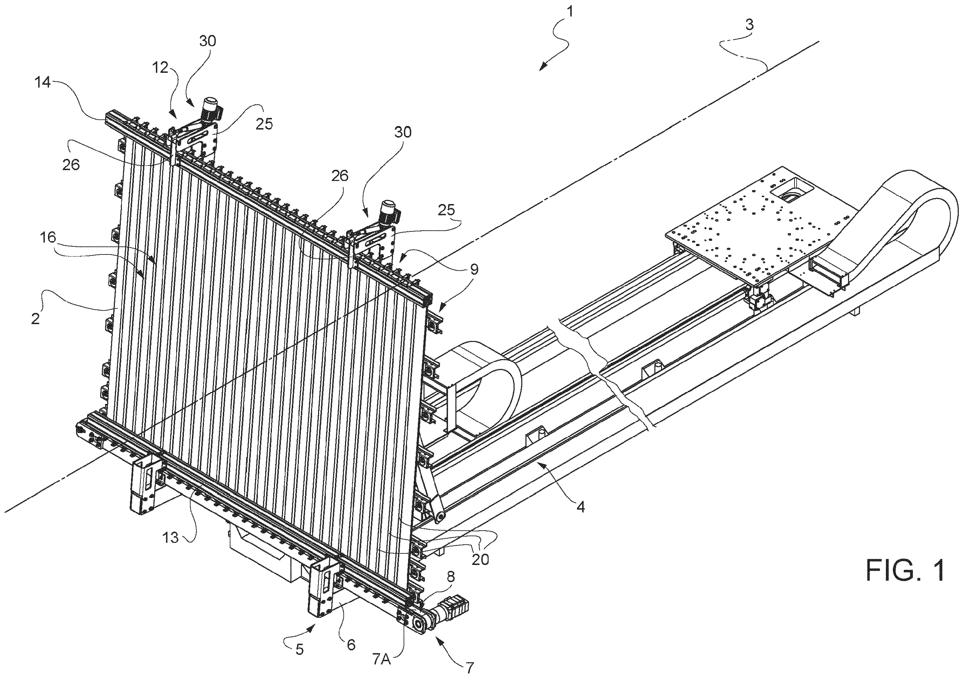

Number 1 in Figure 1 indicates, as a whole, an assembly for transferring a glass sheet 2 arranged upright, i.e., in a vertical position or inclined by a few degrees with respect to the vertical, along a transfer direction 3.

The assembly 1 comprises a fixed guide 4, for example, resting on the floor, and a motorised shuttle 5 movable in opposite directions along the guide 4 in direction 3, for example between a loading storage unit and a sheet processing line, not shown.

The shuttle 5 comprises its own structure 6, which is coupled, in a by itself known manner, to the guide 4 and is fitted with a motorised lower belt conveyor 7, known by itself and not described in detail, for loading and unloading the sheet 2.

The conveyor 7 comprises a horizontal loading and unloading branch 7A extending orthogonally to direction 3 and defining a horizontal lower support surface 8 for the sheet 2 to be transferred.

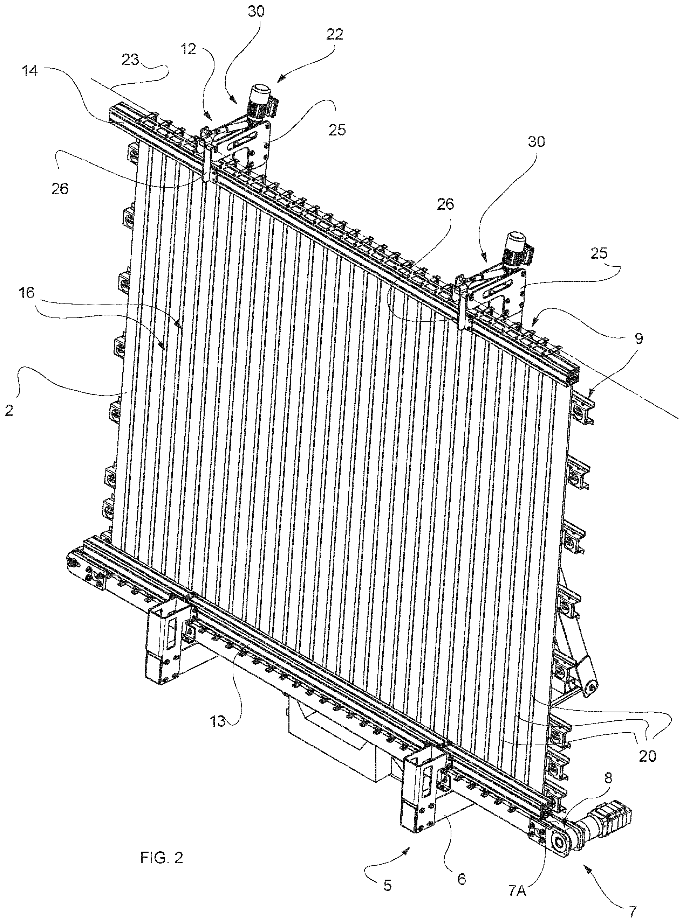

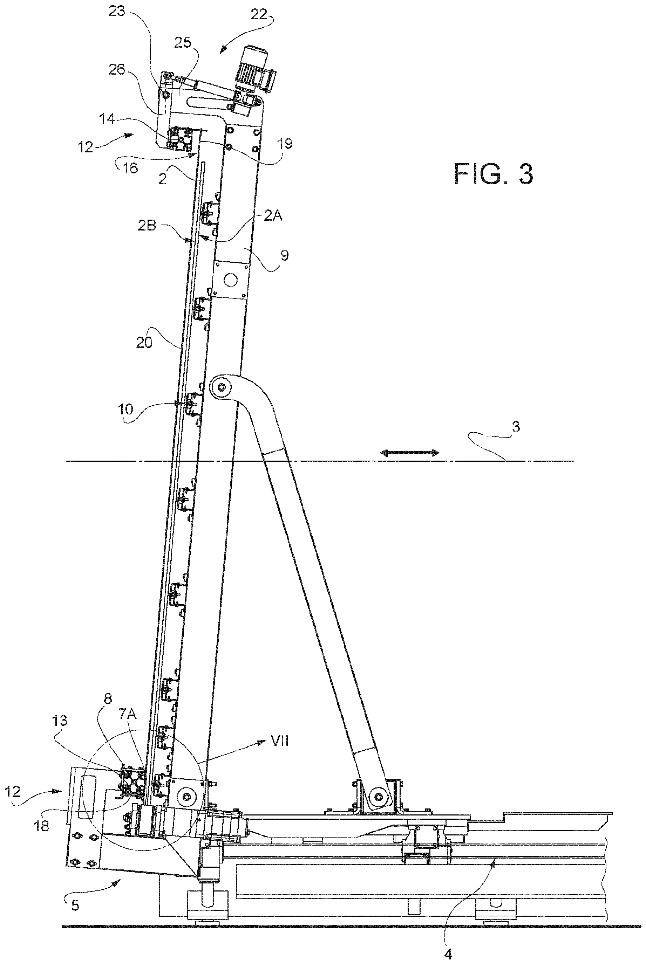

With reference to Figures 2 and 3, the shuttle 5 also comprises a lateral frame 9 for abutment of the sheet 2, known by itself and not described in detail.

The lateral frame 9 extends upwards from the lower support surface 8 and defines a lateral abutment surface 10 for an extended surface 2A of the sheet 2. The lateral surface 10 allows the sheet 2 arranged upright to be arranged and kept stationary when the shuttle is in a stationary condition.

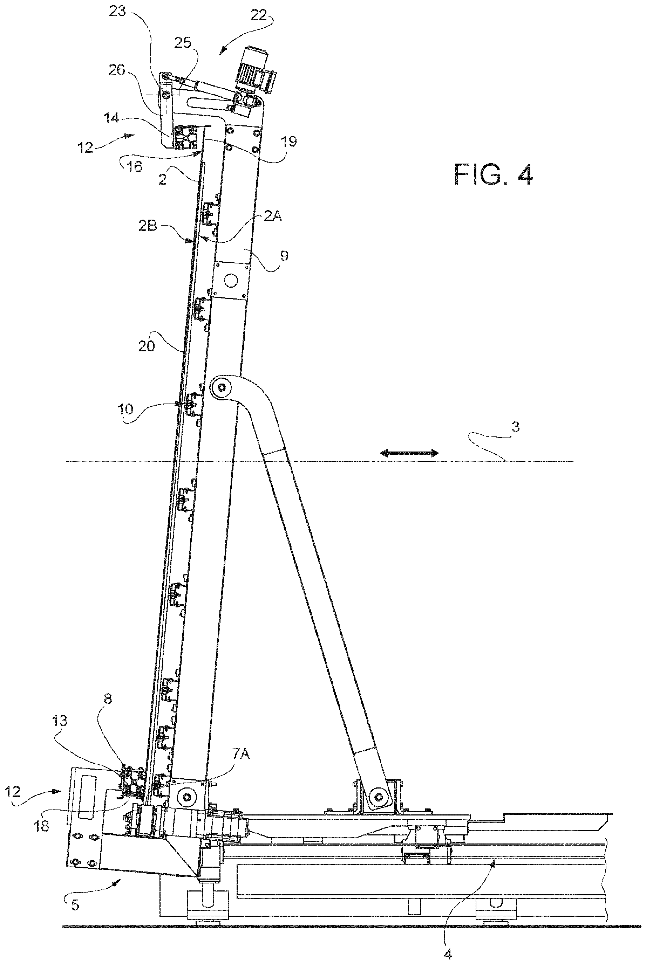

Again, with reference to Figures 3 and 4, the shuttle 5 further comprises a sheet locking unit 12 to hold the sheet 2 resting on the lateral surface 10 or in any case in a position parallel to the lateral surface 10 during the movement of the shuttle 2 in the transfer direction 3.

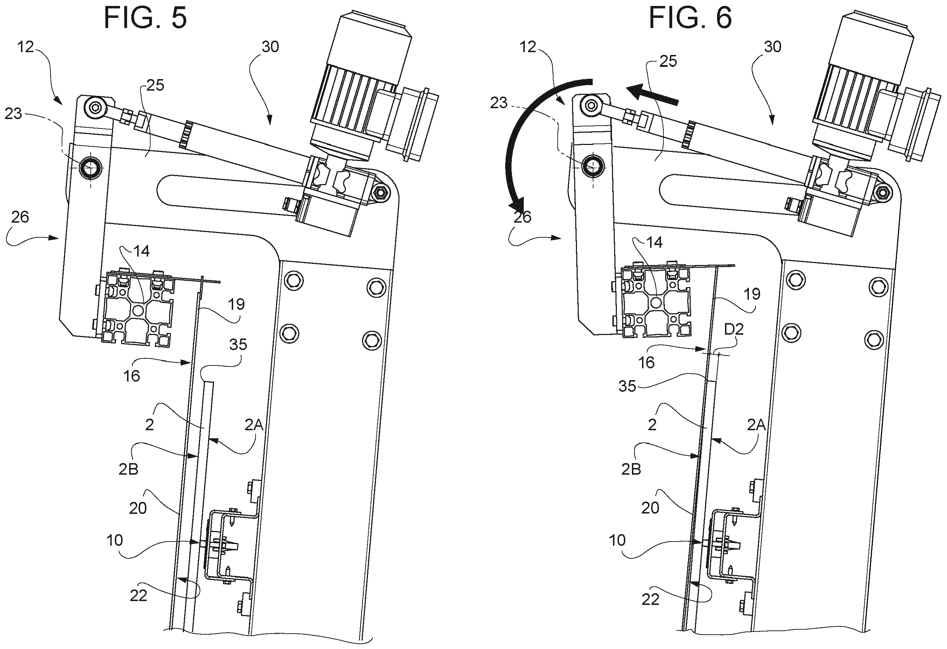

The unit 12 comprises a fixed lower crossbar 13 arranged raised with respect to the lower surface 8 and facing and spaced apart from the lateral surface 10, a movable upper crossbar 14 parallel to the crossbar 10 and arranged above the lateral surface 10, and in use, above the sheet 2 (Figures 5 and 6), and a plurality of straps 16 arranged adjacent to each other and extending between the crossbars 13 and 14 (Figures 1 and 2).

Conveniently, the straps 16 are made of Kevlar^{®}. Alternatively, the straps 16 comprise a steel core coated with a material resistant to rubbing wear, for example a plastic or elastomeric material.

Alternatively, the straps 16 are replaced by cables having a core of steel or other equivalent, coated or uncoated, non-stretchable material.

Regardless of how they are made, the straps 16 each have a respective lower end portion 18 stably connected to the lower crossbar 13, an upper end portion 19 stably connected to the crossbar 14, and an intermediate portion 20 facing the lateral surface 10 and extending between the crossbars 13 and 14. The lateral portions 20 lie on a common plane 22.

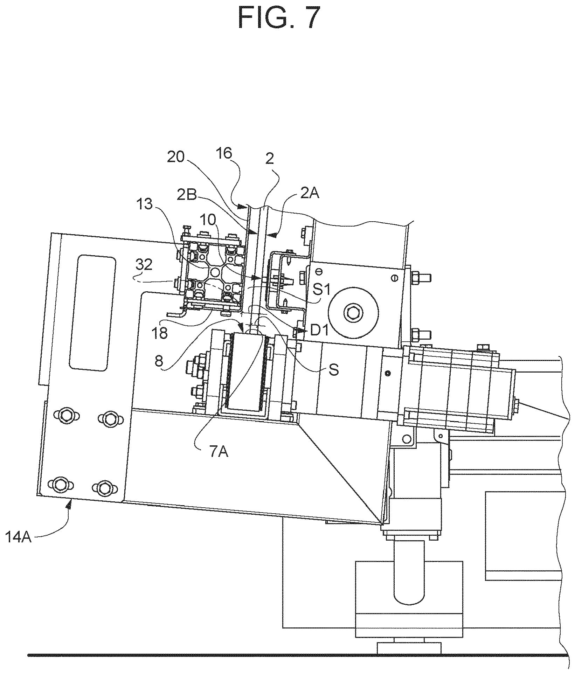

With reference to Figures 3 and 4, and in particular to Figure 7, the lower crossbar 13 is coupled to the frame 6 by means of a connection device 14A, which allows the distance of the crossbar 13 from the lateral surface 10 to be set during a step of configuration of the shuttle 5 and allows this distance to be kept fixed during the normal transfer operations of the sheet 2.

The position of the crossbar 13 is chosen so that the distance D1 of a lower end of the intermediate portion 20 from the lateral surface 10 is greater than the thickness S of the sheet 2 and so that between this end and the lateral surface 10 there is always an empty space S1 greater than the thickness S of the sheet 2, as shown in Figures 3, 4 and 7.

With reference to Figures 3 and 4, and in particular to Figures 5 and 6, the upper crossbar 14 is coupled to the frame 9 by means of a hinging and rotation device 22, which forms part of the unit 12 and is configured to rotate the crossbar 14 around a fixed hinge axis 23 parallel to the lateral surface 10 and orthogonal to direction 3.

In particular, the device 22 comprises two fixed attachment arms 25 stably connected to an upper end of the frame 9 and protruding in a cantilever fashion from and above the lateral surface 10. For each arm 25, the device 22 comprises a respective rocker lever 26 having an intermediate portion hinged to the respective arm 25 for oscillating around the axis 23.

Again, with reference to Figures 5 and 6, each lever 26 carries the crossbar 14 stably connected to its lower end and has its own opposite end hinged to a respective gearmotor 30.

The gearmotors 30 are configured and synchronized with each other to rotate the respective rocker levers 26 in opposite directions around the common axis 23 and to consequently move the crossbar 14 between a rearward position, shown in Figures 3 and 5, and a forward position for holding the glass sheet 2, shown in Figures 4 and 6. In both positions, the straps 16 are tensioned.

When the crossbar 14 is arranged in its rearward position - Figures 3 and 5 - the intermediate portions 20 of the straps 16 are spaced from the sheet 2 and their lying plane 22 is parallel to the lateral surface 10 so that they never intercept the sheet 2 and do not hinder the operations of loading/unloading the sheet 2 onto the shuttle 5.

During its movement between the rearward and forward positions, the upper crossbar 14 simultaneously rotates all the intermediate portions 20 around a common hinge axis, indicated by 32 in Figure 7, parallel to the lower crossbar 10 and the lateral surface 10 and orthogonal to direction 3. In the example shown, the axis 32 is arranged at the lower end of the lower crossbar 13 and is therefore substantially arranged at the distance D1 from the lateral surface 10. In any case, the hinge axis 32 delimits at the bottom the plane 22 where the intermediate portions 20 of the straps 16 lie. Therefore, the plane 22 oscillates from and towards the lateral surface 10 during the movement of the upper crossbar 14.

When the crossbar 14 is arranged in its forward position it pushes the end portions 19 beyond an extended surface 2B of the sheet 2 opposite the surface 2A and towards the lateral frame 9, arranging the upper ends of the intermediate portions 20 at a distance D2 from the lateral surface 10 smaller than the distance D1 and exclusively in abutment against the upper lateral edge 35 of the sheet 2, so that the sheet 2 itself exerts a thrust force against the lateral surface 10.

From the above, it therefore appears that during the movement of the shuttle 5, the sheet 2 is not only maintained resting or in any case parallel to the lateral support surface 10 but is maintained in this position without ever acting on the extended surface 2B which is therefore protected from damage. In fact, as stated above, the inertia actions which would tend to overturn the glass sheet are nullified by exerting, through the straps 16, a holding thrust in the opposite direction and exclusively on the upper peripheral edge 35 of the sheet 2.

The distribution of the straps 16 along the crossbars 13 and 14 then allows the holding thrust to be distributed along the entire lateral edge 31 without generating stress concentrations on the glass sheet 2.

In addition to this, the use of tensioned and non-stretchable straps allows the retention of any sheets regardless of their height, shape, and geometry, that is, regardless of whether they are flat or curved sheets. The use of straps also allows the retention of glass sheets of any thickness by setting the distance of the crossbar 13 from the lateral abutment surface 10 so that the space S is always present.

Lastly, the use of adjacent straps considerably facilitates the loading and unloading operations, since the lateral surface 10, on one side, and the plane 22 where the portions 20 of the straps 16 lie, on the other side, define a tunnel or corridor for guiding the glass sheets 2.

From the above it is clear that the shuttle 5 could comprise a number of straps 16 other than that indicated by way of example and at most one strap only. Not only that, but the straps 16 could be replaced with other elongated, flexible or inflexible elements.

In addition to this, the straps 16 could be fixed at one end, for example the lower end, to the crossbar 13, and be coupled at the opposite end to the crossbar 14 by means of elastic tensioning or pre-tensioning members, such as for example tension springs, or mechanical members, for example reels. This connection mode allows the action exerted on the glass sheet 2 to be kept unchanged in the presence of strong variations in the geometry or dimensions of the sheet.

Moreover, both opposite ends of the straps 16 could be connected to the crossbars 13,14 by means of elastic pre-tensioning devices.

Furthermore, the straps 16 could be oriented in a different way from the one indicated to act, for example, on peripheral edges of the sheet other than the upper edge 35 and, for example, on the vertical edges.

From the foregoing, it also appears that the locking unit 12 could simultaneously retain two or more glass sheets 2 arranged side by side on the conveyor 7, or one or more packs of glass sheets. In the latter case, the distance D1 will be greater than the thickness of the pack of sheets, and the first sheet of the pack, the outermost one, will be the one on whose peripheral edge the straps 16 will act to keep all the glass sheets of the pack in a fixed position with respect to the lateral surface 10.

## Claims

1. A shuttle (5) for moving at least one glass sheet (2) arranged upright along a transfer direction (3); the shuttle comprising a lower support rest (8) for the glass sheet, a lateral frame (9) extending upwards and over said lower rest and defining a lateral abutment surface (10) for said glass sheet and retention means (12) for keeping said glass sheet parallel to said lateral abutment surface (10), **characterised in that** said retention means comprise at least one thrust member (16) configured to act exclusively on an outer peripheral edge of said glass sheet laterally delimiting a first extended surface (2B) of said glass sheet opposite to a second extended surface (2A) of the same sheet facing said lateral abutment surface (10).

2. The shuttle according to claim 1, **characterised in that** said thrust member (16) comprises a belt-like portion (20) oscillating around a fixed hinge axis (32) parallel to said lateral abutment surface (10) and transverse to said transfer direction (3) and acting, in use, on said peripheral edge (35).

3. The shuttle according to claim 2, **characterised in that** said hinge axis (32) is arranged adjacent to said lower support rest (8).

4. The shuttle according to claim 2 or 3, **characterised in that** said hinge axis (32) is arranged at a distance from said lateral abutment surface (10) greater than the thickness (S) of said glass sheet.

5. The shuttle according to any one of the claims from 2 to 4, **characterised in that** said thrust member comprises at least one movable strap (16) and **in that** said retention means also comprise motorised means (30) for moving said strap (16) from and towards said lateral abutment surface (10); said belt-like portion (20) forming an intermediate portion of said strap (16).

6. The shuttle according to claim 5, **characterised in that** said strap (16) is not stretchable.

7. The shuttle according to claim 5 or 6, **characterised in that** said belt-like portion (20) comprises a fixed end placed at a first distance (D1) from said lateral abutment surface (10) and a mobile end; said motorised moving means being configured to move said mobile end between a position spaced from said lateral abutment surface (10) and a retention position closer to said lateral abutment surface (10), wherein said mobile end is placed at a second distance (D2) from said lateral abutment surface (10) shorter than said first distance (D1) and, in use, only in contact with said peripheral edge (35).

8. The shuttle according to any one of the claims from 5 to 7, **characterised in that** it comprises a plurality of said straps (16) alongside one another along said fixed hinge axis (32); the belt-like portions (20) of said straps (16) lying on a single virtual plane (22) locking the sheet which is rotatable around said fixed hinge axis (32) between a sheet loading position on said lower rest (8) and a sheet retention position, in which it intersects said lateral abutment surface from the outside of said glass sheet (2).

9. The shuttle according to any one of the claims from 5 to 8, **characterised in that** said retention means also comprise a lower crossbar (13) and an upper crossbar (14) parallel to one another; said strap (16) having opposite end portions (18) (19) coupled to said crossbars (13) (14); said lower crossbar (13) being a fixed crossbar and said upper crossbar (14) being a mobile crossbar; actuating means (30) being provided to move said upper crossbar (14) from and towards said lateral surface (10).

10. A method for moving a glass sheet (2) by means of a shuttle (5) movable in a sheet transfer direction (3), the method comprising the steps of arranging at least one glass sheet upright over a lower rest (8) of the shuttle, advancing the shuttle in the transfer direction (3) and keeping the glass sheet in a fixed position with respect to the lateral abutment surface (10) extending over said lower rest (8) during the advancing of the shuttle; **characterised in that** the keeping of the glass sheet in a fixed position with respect to the lateral abutment surface (10) is carried out by exerting a thrust exclusively on a peripheral edge (35) of said glass sheet delimiting a first extended surface (2B) of said glass sheet opposite to a second extended surface (2A) of the same glass sheet facing said lateral abutment surface (10).

11. The method according to claim 10, **characterised in that** said thrust is exerted on an upper edge (35) of said glass sheet.

12. The method according to claim 11, **characterised in that** said thrust is exerted by using at least one mobile locking strap (16).

13. The method according to claim 12, **characterised in that** said thrust is exerted, by fixing a portion (18) of said strap (16) in a position spaced from said first extended surface (2B) and by moving a second portion (19) of the strap (16) protruding outwards from said outer peripheral edge (35) from and towards said lateral abutment surface (10) until bringing an intermediate portion of said strap (16) into contact with said outer peripheral edge (35).

## Patentansprüche

1. Shuttle (5) zum Bewegen mindestens einer aufrecht angeordneten Glasscheibe (2) entlang einer Transferrichtung (3); wobei das Shuttle eine untere Stützauflage (8) für die Glasscheibe, einen seitlichen Rahmen (9), der sich nach oben und über die untere Auflage erstreckt und eine seitliche Anlagefläche (10) für die Glasscheibe definiert, und Rückhaltemittel (12) aufweist, um die Glasscheibe parallel zu der seitlichen Anlagefläche (10) zu halten, **dadurch gekennzeichnet, dass** die Rückhaltemittel mindestens ein Andrückelement (16) aufweisen, das so ausgebildet ist, dass es ausschließlich auf einen äußeren Umfangsrand der Scheibe einwirkt, der seitlich eine erste verlängerte Fläche (2B) der Scheibe gegenüber einer zweiten verlängerten Fläche (2A) derselben Scheibe begrenzt, die der seitlichen Anschlagfläche (10) gegenüberliegt.

2. Shuttle nach Anspruch 1, **dadurch gekennzeichnet, dass** das Andrückelement (16) einen riemenartigen Bereich (20) aufweist, der um eine feste Gelenkachse (32) parallel zu der seitlichen Anlagefläche (10) und quer zu der Transferrichtung (3) schwingt und im Gebrauch auf den Umfangsrand (35) wirkt.

3. Shuttle nach Anspruch 2, **dadurch gekennzeichnet, dass** die Gelenkachse (32) neben der unteren Stützauflage (8) angeordnet ist.

4. Shuttle nach Anspruch 2 oder 3, **dadurch gekennzeichnet, dass** die Gelenkachse (32) in einem Abstand von der seitlichen Anlagefläche (10) angeordnet ist, der größer als die Dicke (S) der Scheibe ist.

5. Shuttle nach einem der Ansprüche 2 bis 4, **dadurch gekennzeichnet, dass** das Andrückelement mindestens einen beweglichen Riemen (16) aufweist und dass die Rückhaltemittel auch motorisierte Mittel (30) aufweisen, um den Riemen (16) von der seitlichen Anlagefläche (10) weg und zu ihr hin zu bewegen, wobei der riemenartige Bereich (20) einen Zwischenbereich des Riemens (16) ausbildet.

6. Shuttle nach Anspruch 5, **dadurch gekennzeichnet, dass** der Riemen (16) nicht dehnbar ist.

7. Shuttle nach Anspruch 5 oder 6, **dadurch gekennzeichnet, dass** der riemenartige Bereich (20) ein festes Ende aufweist, das in einem ersten Abstand (D1) von der seitlichen Anlagefläche (10) angeordnet ist, und ein bewegliches Ende; wobei das motorisierte Bewegungsmittel ausgebildet ist, um das bewegliche Ende zwischen einer Position, die von der seitlichen Anlagefläche (10) beabstandet ist, und einer Rückhalteposition, die näher an der seitlichen Anlagefläche (10) liegt, zu bewegen, wobei das bewegliche Ende in einem zweiten Abstand (D2) von der seitlichen Anlagefläche (10) angeordnet ist, der kürzer ist als der erste Abstand (D1), und im Gebrauch nur in Kontakt mit dem Umfangsrand (35) ist.

8. Shuttle nach einem der Ansprüche 5 bis 7, **dadurch gekennzeichnet, dass** es eine Mehrzahl der Riemen (16) nebeneinander entlang der festen Gelenkachse (32) aufweist; wobei die riemenartigen Bereiche (20) der Riemen (16) auf einer einzigen virtuellen Ebene (22) liegen, die die Scheibe festhält, die um die feste Gelenkachse (32) zwischen einer Scheibenladeposition auf der unteren Stützauflage (8) und einer Scheibenhalteposition drehbar ist, in der sie die seitliche Anlagefläche von der Außenseite der Glasscheibe (2) schneidet.

9. Shuttle nach einem der Ansprüche 5 bis 8, **dadurch gekennzeichnet, dass** die Rückhaltemittel auch einen unteren Querbalken (13) und einen oberen Querbalken (14) aufweisen, die parallel zueinander verlaufen; wobei der Riemen (16) gegenüberliegende Endabschnitte (18) (19) aufweist, die mit den Querbalken (13) (14) verbunden sind; wobei der untere Querbalken (13) ein fester Querbalken und der obere Querbalken (14) ein beweglicher Querbalken ist; wobei ein Aktuator (30) vorgesehen ist, um den oberen Querbalken (14) von der seitlichen Fläche (10) weg und zu ihr hin zu bewegen.

10. Ein Verfahren zum Bewegen einer Glasscheibe (2) mittels eines Shuttles (5), der in einer Scheibentransferrichtung (3) beweglich ist, wobei das Verfahren die Schritte aufweist: mindestens eine Glasscheibe aufrecht über einer unteren Stützauflage (8) des Shuttles anzuordnen, den Shuttle in der Transferrichtung (3) vorwärts zu bewegen und die Glasscheibe in einer festen Position in Bezug auf die seitliche Anlagefläche (10) zu halten, die sich über die untere Stützauflage (8) während des Vorwärtsbewegens des Shuttles erstreckt; **dadurch gekennzeichnet, dass** das Halten der Glasscheibe in einer festen Position in Bezug auf die seitliche Anlagefläche (10) durch Ausüben eines Drucks ausschließlich auf einen Umfangsrand (35) der Glasscheibe erfolgt, der eine erste verlängerte Fläche (2B) der Glasscheibe gegenüber einer zweiten verlängerten Fläche (2A) derselben Glasscheibe begrenzt, die der seitlichen Anlagefläche (10) gegenüberliegt.

11. Das Verfahren nach Anspruch 10, **dadurch gekennzeichnet, dass** der Druck auf einen oberen Rand (35) der Scheibe ausgeübt wird.

12. Das Verfahren nach Anspruch 11, **dadurch gekennzeichnet, dass** der Druck mit Hilfe mindestens eines beweglichen Riemens (16) ausgeübt wird.

13. Das Verfahren nach Anspruch 12, **dadurch gekennzeichnet, dass** der Druck ausgeübt wird, indem ein Abschnitt (18) des Riemens (16) in einer von der ersten verlängerten Fläche (2B) beabstandeten Position fixiert wird und indem ein zweiter Abschnitt (19) des Riemens (16), der von der äußeren Umfangskante (35) nach außen vorsteht, von der seitlichen Anlagefläche (10) weg und auf diese zu bewegt wird, bis ein Zwischenabschnitt des Riemens (16) in Kontakt mit der äußeren Umfangskante (35) gebracht wird.

## Revendications

1. Navette (5) pour déplacer au moins une feuille de verre (2) disposée debout le long d'une direction de transfert (3) ; la navette comprenant un appui de support inférieur (8) pour la feuille de verre, un cadre latéral (9) s'étendant vers le haut et au-dessus dudit appui inférieur et définissant une surface latérale de butée (10) pour ladite feuille de verre et des moyens de retenue (12) pour maintenir ladite feuille de verre parallèle à ladite surface latérale de butée (10), **caractérisée en ce que** lesdits moyens de retenue comprennent au moins un élément de poussée (16) configuré pour agir exclusivement sur un bord périphérique extérieur de ladite feuille de verre délimitant latéralement une première surface étendue (2B) de ladite feuille de verre opposée à une seconde surface étendue (2A) de la même feuille faisant face à ladite surface latérale de butée (10).

2. Navette selon la revendication 1, **caractérisée en ce que** ledit élément de poussée (16) comprend une partie en forme de courroie (20) oscillant autour d'un axe d'articulation fixe (32) parallèle à ladite surface latérale de butée (10) et transversal à ladite direction de transfert (3) et agissant, en utilisation, sur ledit bord périphérique (35).

3. Navette selon la revendication 2, **caractérisée en ce que** ledit axe d'articulation (32) est disposé à proximité adjacente dudit appui de support inférieur (8).

4. Navette selon la revendication 2 ou 3, **caractérisée en ce que** ledit axe de charnière (32) est disposé à une distance de ladite surface latérale de butée (10) supérieure à l'épaisseur (S) de ladite feuille de verre.

5. Navette selon l'une quelconque des revendications 2 à 4, **caractérisée en ce que** ledit élément de poussée comprend au moins une sangle mobile (16) et **en ce que** lesdits moyens de retenue comprennent également des moyens motorisés (30) pour déplacer ladite sangle (16) depuis et vers ladite surface latérale de butée (10) ; ladite partie en forme de courroie (20) formant une partie intermédiaire de ladite sangle (16).

6. Navette selon la revendication 5, **caractérisée en ce que** ladite sangle (16) n'est pas extensible.

7. Navette selon la revendication 5 ou 6, **caractérisée en ce que** ladite partie en forme de courroie (20) comprend une extrémité fixe placée à une première distance (D1) de ladite surface latérale de butée (10) et une extrémité mobile ; lesdits moyens de déplacement motorisés étant configurés pour déplacer ladite extrémité mobile entre une position espacée de ladite surface latérale de butée (10) et une position de retenue plus proche de ladite surface latérale de butée (10), dans laquelle ladite extrémité mobile est placée à une seconde distance (D2) de ladite surface de butée latérale (10) plus courte que ladite première distance (D1) et, en utilisation, uniquement en contact avec ledit bord périphérique (35).

8. Navette selon l'une quelconque des revendications 5 à 7, **caractérisée en ce qu'**elle comprend une pluralité desdites sangles (16) côte à côte le long dudit axe d'articulation fixe (32) ; les parties en forme de courroie (20) desdites sangles (16) reposant sur un plan virtuel unique (22) en verrouillant la feuille qui peut tourner autour dudit axe de charnière fixe (32) entre une position de chargement de feuille sur ledit appui inférieur (8) et une position de retenue de feuille, dans laquelle elle entrecoupe ladite surface latérale de butée depuis l'extérieur de ladite feuille de verre (2).

9. Navette selon l'une quelconque des revendications 5 à 8, **caractérisée en ce que** lesdits moyens de retenue comprennent également une barre transversale inférieure (13) et une barre transversale supérieure (14) parallèles l'une à l'autre ; ladite sangle (16) ayant des parties d'extrémité opposées (18) (19) couplées auxdites barres transversales (13) (14) ; ladite barre transversale inférieure (13) étant une barre transversale fixe et ladite barre transversale supérieure (14) étant une barre transversale mobile ; des moyens d'actionnement (30) étant prévus pour déplacer ladite barre transversale supérieure (14) depuis et vers ladite surface latérale (10) .

10. Méthode pour déplacer une feuille de verre (2) au moyen d'une navette (5) mobile dans une direction de transfert de feuille (3), la méthode comprenant les étapes consistant à disposer au moins une feuille de verre debout sur un appui inférieur (8) de la navette, à faire avancer la navette dans la direction de transfert (3) et à maintenir la feuille de verre dans une position fixe par rapport à la surface latérale de butée (10) s'étendant sur ledit appui inférieur (8) lors de l'avancement de la navette ; **caractérisée en ce que** le maintien de la feuille de verre en position fixe par rapport à la surface latérale de butée (10) est réalisé en exerçant une poussée exclusivement sur un bord périphérique (35) de ladite feuille de verre délimitant une première surface étendue (2B) de ladite feuille de verre opposée à une seconde surface étendue (2A) de la même feuille de verre faisant face à ladite surface latérale de butée (10).

11. Méthode selon la revendication 10, **caractérisée en ce que** ladite poussée est exercée sur un bord supérieur (35) de ladite feuille de verre.

12. Méthode selon la revendication 11, **caractérisée en ce que** ladite poussée est exercée en utilisant au moins une sangle de verrouillage mobile (16).

13. Méthode selon la revendication 12, **caractérisée en ce que** ladite poussée est exercée, en fixant une partie (18) de ladite sangle (16) dans une position espacée de ladite première surface étendue (2B) et en déplaçant une seconde partie (19) de la sangle (16) en saillie vers l'extérieur dudit bord périphérique extérieur (35) depuis et vers ladite surface latérale de butée (10) jusqu'à amener une partie intermédiaire de ladite sangle (16) en contact avec ledit bord périphérique extérieur (35).
